# EUROPEAN PATENT APPLICATION

(11) **EP 1 626 328 A1**
(43) Date of publication of application: **15.02.2006**
(21) Application number: 04392033.9
(22) Date of filing: 13.08.2004
(51) Int. Cl.: G06F 1/32, G06F 9/445

(54) **Power saving during idle loop**

(71) Applicant: Dialog Semiconductor GmbH, 73230 Kirchheim/Teck-Nabern (DE)
(72) Inventor: Aakjer, Thomas, 81667 Munich (DE)
(74) Representative: Schuffenecker, Thierry

(57) **Abstract**

The power consumption when the memory is accessed is often a concern for low power microcontroller systems. Specifically it is desirable to minimize the power consumption during the often very long periods of processor idling time. The invention presented implements a power saving technique by replacing the program memory, containing the idle-program-routine with a simple hard wired address-decoder and coded-data-driver to produce the very few program instructions to run the processor in a permanent loop. The minimum implementation just produces the few bytes for a single instruction to jump back to its own address. As there are very few circuits involved, its memory power consumption is nearly zero.

## Description

### Technical field

The presented invention relates to low power microcontroller systems, their memory functions and to power saving circuits.

### Background art

In low power microcontroller systems, the memory power consumption is often a concern. In situations, where no active task is to be performed and the processor is running through an idling routine with only a few instructions, the memory power consumption seems to be a waste. Nevertheless, at least that section of the program memory, containing the idle program routine, must be active. Though modern arrays are low power designs, they consume a considerable amount of energy. Often shadow RAMs are used for shadowing a part of e.g. the flash memory in order to save power by not repeatedly accessing the Flash memory (assuming RAM access current consumption is less than the flash memory access current consumption).

Specifically it is desirable to reduce the power consumption during the often very long periods of processor idling time to an absolute minimum.

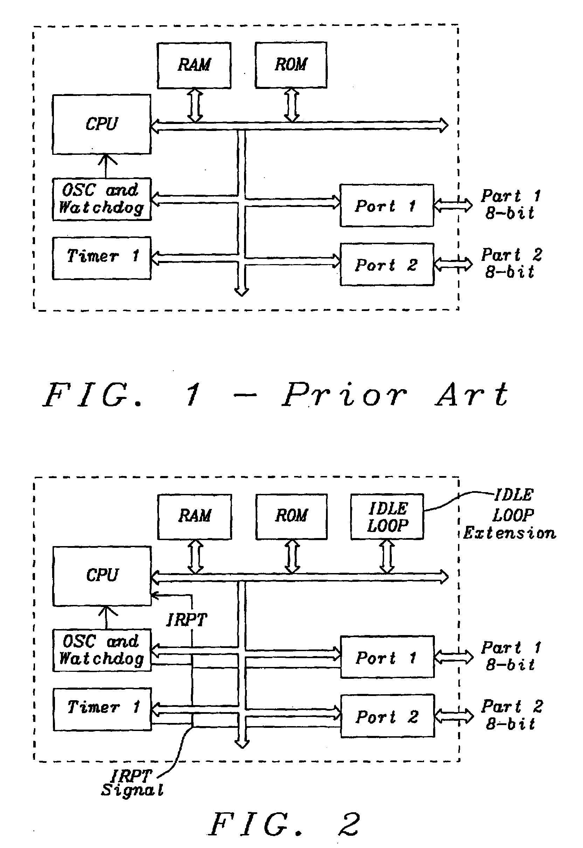

Fig. 1 shows one conceptual diagram of a microprocessor with its attached RAM and ROM memories and some Peripheral I/O Channels.

U. S. Patent 6,633,988 (to Watts,Jr. et al.) describes a processor having real-time power conservation and comprising a monitor for measuring the relative amount of Input/Output (I/O) within the processor, results of the measuring being used by the processor for controlling a clock speed of the processor. Another embodiment discloses a processor, comprising a monitor for measuring the relative importance of Input/Output (I/O) within the processor, results of the measuring being used by the processor for controlling a clock speed of said processor. Still another embodiment discloses a processor, comprising a monitor for measuring the relative amount of time between Input/Output (I/O) within the processor, results of the measuring being used by the processor for controlling a clock speed of the processor.

U. S. Patent 6,717,881 (to Ooishi) discloses a semiconductor memory device having potential control circuit wherein, if data is to be written to a specific memory cell in each of two adjacent memory cell array blocks, a switch control circuit and a supply circuit supply a first predetermined potential to a first bit line out of first and second bit lines connected to the specific memory cell and supply a second predetermined potential to the second bit line in one memory cell array block. In addition, the first predetermined potential is supplied to the second bit line and the second predetermined potential is supplied to the first bit line in the other memory cell array block. Due to this, this semiconductor memory device can improve throughput while suppressing a current which unnecessarily occurs during data write.

U. S. Patent 6,728,156 (to Kilmer et al.) shows a memory array system, which is provided comprising a plurality of rows of memory cells, each row having an address, wherein each memory cell stores volatile data requiring periodic refreshing. A refresh controller controls the periodic refreshing of data in each row of memory cells. A refresh address counter indicates the address of the row of cells for refreshing. A temporary data storer is used for storing data from the memory cell indicated for refreshing. A data inverter inverts data from the memory cell indicated for refreshing. A comparator associated with the temporary data storer and the data inverter compares data in those devices. An indicator bit is associated with the refresh address counter to indicate whether the data stored in the address indicated by the refresh address counter is inverted.

### Summary of the invention

The power consumption when the memory is accessed is often a concern for low power microcontroller systems. In many microcontroller systems the processor runs in an idle loop most of the time until it is interrupted by an external event.

A principal object of the invention is to minimize the power consumption during the often very long periods of processor idling time. The invention presented in this document implements a power saving technique by replacing the program memory, containing the idle-program-routine with a simple hard wired address-decoder and coded data-driver to produce the very few program instructions to run the processor in a permanent loop and by completely switching off all conventional program memory during said idle periods. The minimum implementation just produces the few bytes for a single instruction to jump back to its own address. As there are very few circuits involved then, its "memory power consumptions" is nearly zero.

Most microcontrollers have a jump instruction, that allows to jump back just by one instructions. Then, as a minimum solution, the hard wired idle loop implements only that single program instruction word, which depending on the processor type, requires to address and to provide a few bytes of data. Logically, said address decoder resides within the normal memory range of the microcontroller, but outside the range of the existing RAM and ROM arrays. To leave the idle loop execution, an external signal to the microcontroller's built in interrupt mechanism causes the microprocessor to jump to a predefined program instruction.

The key idea and implementation of the invention is to use no conventional RAM and ROM memory at all throughout the idle period and to replace it with a simple hard wired address-decoder and coded data-driver to produce the very few program instructions to run the processor in a permanent loop. Said replacement of the program memory, is called the "idle loop memory replacement" in the remainder of this document.

Another idea of the invention key is to implement the few circuits of the extra logic for address decoding, instruction code generation and data bus driving within the same logic circuit arrangement, that normally contains the address decoder, chip select and write/read control signal generation for the conventional RAM and ROM memories.

A further key idea and implementation is to add a few data registers, that work as a very small instruction memory, just large enough to contain a short program to handle, for example, a task dispatching program. Said very small instruction memory contains a small number of instruction word registers, holding 2 to 20 instructions might be a practical number, thus not only implementing a fixed hard coded idle loop, but also implementing a programmable idle loop with at least a small number of loadable program instructions.

In accordance with the objectives of this invention, a circuit to implement a microcontroller memory replacement of very low power, generating said small number hard coded of program instructions to build a microcontroller idle program routine, comprises means for a microcontroller, an address bus and a data bus, and further the means for the appropriate control and timing signals to control address selection and data access. As its key components the invention comprises the means for an address decoder, decoding a very small number of specific addresses provided on said address bus, selecting the same very small number of specific program instruction words and finally it comprises means for a set of coded data bus drivers, driving coded data, representing said very small number of specific program instruction words, addressed by said specific addresses, to said data bus.

Further In accordance with the objectives of this invention, a circuit to implement a microcontroller memory replacement of very low power, storing a small number of program instructions to handle, for example, a short task dispatching program plus the small number of specific hard coded program instructions, required to build a microcontroller idle program routine, comprises means for a microcontroller, an address bus, a data bus, and further the means for the appropriate control and timing signals to control address selection and data access. As its key components the invention comprises the means for an address decoder, decoding a small number of specific addresses provided on said address bus, selecting the same small number of program instruction words. The key component further include means for a small set of data registers to store a multiple of program instructions to handle, for example, a short idle program and the means to write data to and read data from said small set of data registers to store a multiple of program instructions. It also comprises the means to provide the coded data, representing the very small number of hard coded program instruction words to build a portion of a microcontroller idle program routine. Finally the circuit comprises the means for a set of data bus drivers, either driving said data read from said small set of data registers, storing a multiple of program instructions, or driving said very small number of hard coded program instruction words, to building a complete microcontroller idle program routine, to said data bus.

In accordance with the objectives of this invention, a method to implement a microcontroller memory replacement, generating the small number of hard coded program instructions to build a microcontroller idle program routine, comprises addressing the instructions of said idle program routine within said microcontroller memory replacement by said microprocessor through said address bus. As key steps in the invention it comprises decoding a very small number of specific addresses provided on said address bus, selecting the same very small number of specific hard coded program instruction words and driving the coded data, representing said very small number of specific hard coded program instruction words, addressed by said specific addresses, to said data bus, where said microcontroller will read said coded data. Finally the method comprises interrupting the idle loop execution by means of a microcontroller's built in interrupt mechanism by an external event.

Even further In accordance with the objectives of this invention, a method implementing a microcontroller memory replacement circuit, storing a multiple of program instructions to handle, for example, a short task dispatching program plus the very small number of specific hard coded program instructions, required to build a microcontroller idle program routine, comprises addressing a small number of program instructions, including said multiple of program instructions to handle a short idle program and including said very small number of specific hard coded program instructions, through said address bus. As key steps in the invention it comprises decoding a small number of specific addresses provided on said address bus, selecting the same small number of specific program instruction words. Further it comprises storing a multiple of program instructions to handle a short idle program in said small set of data registers and writing data to and reading data from said small set of data registers to store a multiple of program instructions to handle a short idle program. It also comprises providing the data, representing the very small number of specific hard coded program instruction words to build a microcontroller idle program routine and driving the data, representing said specific program instruction words to said data bus, where said microcontroller will read said coded data. Finally the method comprises interrupting the idle loop execution at an external event either by means of a microcontroller's built in interrupt mechanism or by detecting an external interrupt condition within said short idle program, for example within said short task dispatching program.

### Description of the drawings

In the accompanying drawings, forming a material part of this description, there is shown:
**Fig. 1 (Prior Art)** shows a conceptual diagram of a microprocessor with its attached RAM and ROM memories and some Peripheral I/O Channels.
**Fig. 2** shows a similar conceptual diagram of a microprocessor with the Idle Loop Memory Replacement added.
**Fig. 3** visualizes the structure of an address bus and data bus, connecting the CPU with the various memory elements.
**Fig. 4** shows a memory address range for RAM, ROM and the Idle Loop Memory Replacement.
**Fig. 5** shows a simplified circuit diagram of the Idle Loop Memory Replacement with its address decoder and its coded data drivers.
**Fig. 6** visualizes the structure of the CPU to memory element connections, with the Idle Loop Memory Replacement moved inside the address decoder circuit.
**Fig. 7** visualizes the concept of a minimum and of a programmable low power idle loop.
**Fig. 8** shows the method for a minimum low power idle loop.
**Fig. 9** shows the method for a programmable low power idle loop.

### Description of the preferred embodiments

The power consumption when the memory is accessed is often a concern for low power microcontroller systems. In many microcontroller systems the processor runs in an idle loop most of the time until it is interrupted by an external event. As a solution, shadow RAMs are often used for shadowing a part of the e.g. flash memory in order to save power by not repeatedly accessing the Flash (assuming RAM access current consumption is lower than the Flash access current consumption).

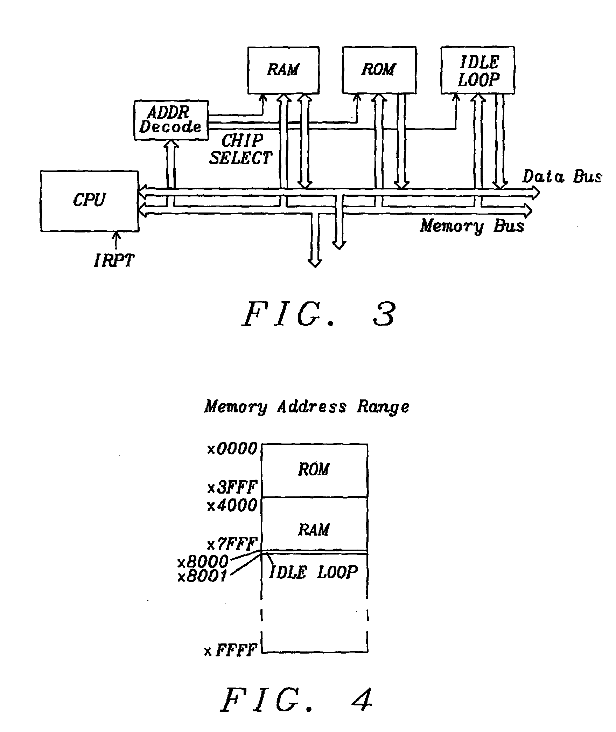

A principal object of the invention is to minimize the power consumption during the often very long periods of processor idling time. The invention presented in this document implements a power saving technique by replacing the program memory, containing the idle-program-routine with a simple hard wired address-decoder and coded data-driver to produce the very few program instructions to run the processor in a permanent loop and by completely switching off all conventional program memory during said idle periods. The thousands of memory cells, though designed to consume very low power each, still consume a lot of power due to their large number. And in an idle situation, only very few memory cells are repetitively used. **Fig. 2** shows a conceptual diagram of a microprocessor with the idle loop memory replacement added to the conventional microcontroller structure. **Fig. 3** visualizes the structure of an address bus, the data bus and the memory control lines, connecting the **CPU** with the memory elements **RAM** and **ROM.** It also shows the interrupt line to the CPU. Logically, the idle loop memory replacement **IDLE LOOP** operates as a normal memory. Burt the implementation requires only very few circuit components, compared to a memory array.

The minimum implementation for said idle loop memory replacement just produces the few bytes for a single instruction to jump back to its own address. As there are very few circuits involved then, its "memory power consumptions" is nearly zero.

Most microcontrollers have a jump instruction, that allows to jump back just by one instructions. Then, as a minimum solution, the hard wired idle loop implements only that single program instruction word, which depending on the processor type, requires to address and to provide a few bytes of data. Logically, said address decoder resides within the normal memory range of the microcontroller, but outside the range of the existing RAM and ROM arrays. **Fig 4** shows the memory address range for a typical microcontroller (see the 8051 example below), with for example the Program ROM area reaching from hexadecimal address x0000 .to address x3FFF and the RAM area reaching from hexadecimal address x4000 .to address x7FFF, followed by just 2 addresses, x8000 and x8001, containing a minimum IDLE LOOP.

In such a minimum solution, it is sufficient to implement a single program instruction For example, with a 8051 type microcontroller, a single loop back instruction is sufficient:
Label1: SJMP Label1, *II* causes a jump to itself (infinite loop)
which in a binary form looks as:

| Address | Data | |
|---|---|---|
| 0x8000 | 0x80 | <-- HEX 80 is the opcode for the SJMP command |
| 0x8001 | 0xFE | <-- Offset to jump 0xFE means jump 1 address back |

In a real implementation it must be considered, that the 8051 CPU always fetches one instruction in advance, therefore the last byte read from the memory should contain a NOOP instruction to be properly dropped.

| Address | Data | |
|---|---|---|
| 0x8000 | 0x80 | |
| 0x8001 | 0xFE | |
| 0x8002 | 0x00 | <-- Sequential read which is discarded |
| 0x8000 | 0x80 | |
| 0x8001 | 0xFE | |
| 0x8002 | 0x00 | <-- Sequential read which is discarded |
| 0x8000 | 0x80 | |

To leave the idle loop execution at an external event, an external signal to the microcontroller's built in interrupt mechanism causes the microprocessor to jump to a predefined program instruction within the normal ROM memory. The idle loop memory replacement which, for example with the 8051 type microcontroller, when address 0x8000 is being read automatically puts 0x80 on the data bus, and when address 0x8001 (and 0x8002) is being read automatically puts 0xFE on the data bus. Said idle loop memory replacement is formed by said memory address decoder and said coded data bus drivers.

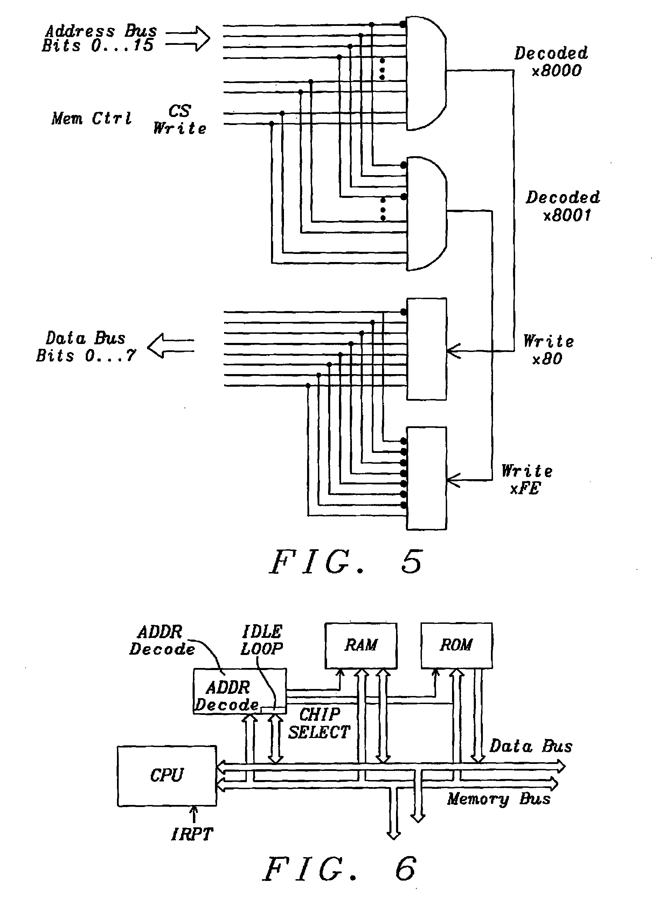

**Fig. 5** shows the basic concept for a possible implementation in circuit hardware. In this example, the address decoder logic provides two signals, one for address x8000 (**Decoded x8000**) and one for x8001 (**Decoded x8000**). Each signal, if selected, then drives coded data to the data bus, in the case if x8000 it drives x80 (**Write x80**) to the bus, in the case if x8001 it drives xFE (**Write xFE**) to the bus.

Some microcontrollers may require more than one program instruction to jump back to their loop entry point. Possible they require two or at least very few instructions.

Another key idea of the invention is to implement the few circuits of the extra logic for address decoding, instruction code generation and data bus driving within the same logic circuit arrangement, that normally contains the address decoder, chip select and write/read control signal generation for the conventional RAM and ROM arrays. **Fig. 6** shows the idle loop memory replacement **IDLE LOOP** moved into the circuit arrangement **ADDR DECODE**, building the logic for the address decoder, chip select and write/read control signal generation for the conventional RAM and ROM memories.

A further key idea is to add a small set of data registers, that work as a very small instruction memory, just large enough to contain a short program to handle, for example, a task dispatching program. Differing from the fixed idle loop of the solution described before, this allows for a programmable idle loop, which may be reloaded at any to tailor its execution to specific idle situations. Such programmable idle loop will, in most implementations, end with a very small number of fixed instructions, very similar to the instructions of said fixed idle loop. As a consequence, the programmable idle loop is built of a loadable instruction sequence and of a fixed instruction sequence.

One more idea of this invention is to preset each instruction register of said small set of data registers to a NOOP instruction. Then the idle loop can be entered without ever loading said instruction registers with valid program code. For example, with a 8051 type microcontroller and similar to the example before, said programmable idle loop, built of said loadable instruction sequence and of said fixed instruction sequence could look in a binary form as:

| Address | Data | |
|---|---|---|
| 0x8000 | 0x00 | <-- opcode 0x00 = NOP (no operation) |
| 0x8001 | 0x00 | |
| 0x8002 | 0x00 | |
| 0x8003 | 0x00 | |
| 0x8004 | 0x00 | |
| 0x8005 | 0x00 | |
| 0x8006 | 0x00 | |
| 0x8007 | 0x00 | |
| 0x8008 | 0x00 | |
| 0x8009 | 0x00 | |
| 0x800A | 0x00 | |
| 0x800B | 0x00 | |
| 0x800C | 0x00 | |
| 0x800D | 0x00 | |
| 0x800E | 0x80 | <-- opcode for SJMP |
| 0x800F | 0xF0 | <-- cause jump to address 0x8000 |

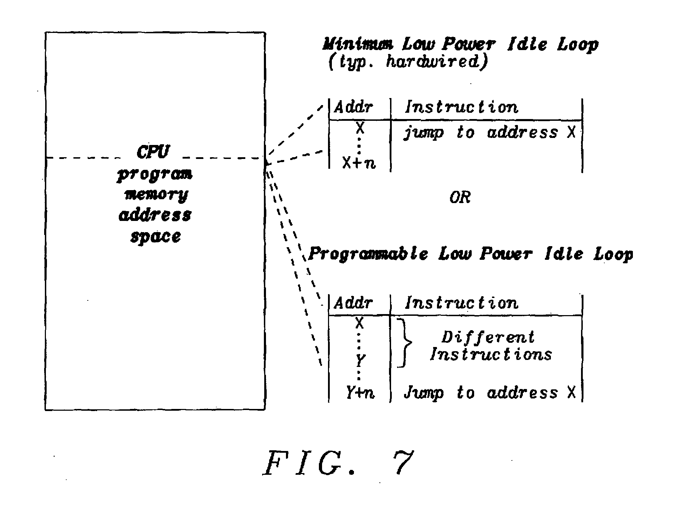

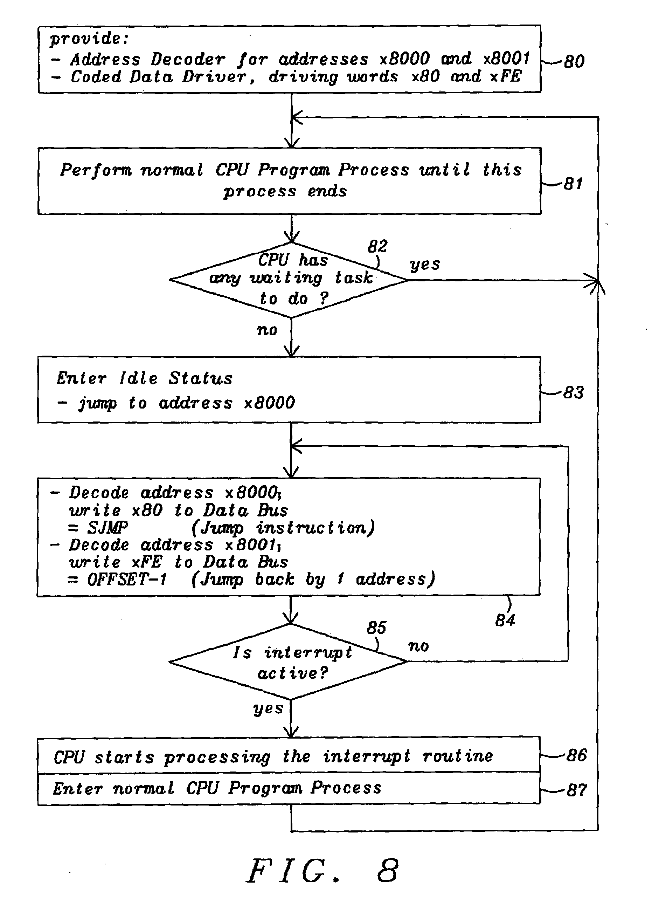

When jumping to address 8000(hex) the opcode on 8000, 8001 and successive instructions is executed, when reaching the opcode on 800E, 800F this is a jump back to address 8000. The contents of addresses 8000-800D could therefore be made programmable to allow for some flexibility in the idle loop. **Fig. 7** visualizes the alternative solutions of a **Minimum Low Power Idle Loop** and a **Programmable Low Power Idle Loop** following the same address space. The method to achieve the objectives of this invention, building a low power replacement for the idle loop memory implementing a minimum low power idle loop is illustrated in **Fig. 8.** The shown example assumes a typical 8051 microcontroller; other processors operate very similar. The circuits for an Address Decoder for addresses x8000 and x8001and for a set of Coded Data Drivers, driving words x80 and xFE, will be provided **(80).** The CPU runs the normal Program Process until this process ends **(81).** When the CPU has no more waiting task to process **(82),** it enters the Idle Status, by jumping to address x8000 **(83).** Said address decoder will first decode address x8000 and write x80 to the Data Bus = SJMP (Jump Instruction) and then decode address x8001 and write xFE to the Data Bus = OFFSET -1 (jump back by 1 address) **(84).** If the interrupt signal is active due to an external event, the CPU leaves the idle loop **(85)** and starts an interrupt routine **(86).** Now the CPU continues with processing a normal program until this process comes to an end **(81).** Then the CPU my fall again into an idle loop.

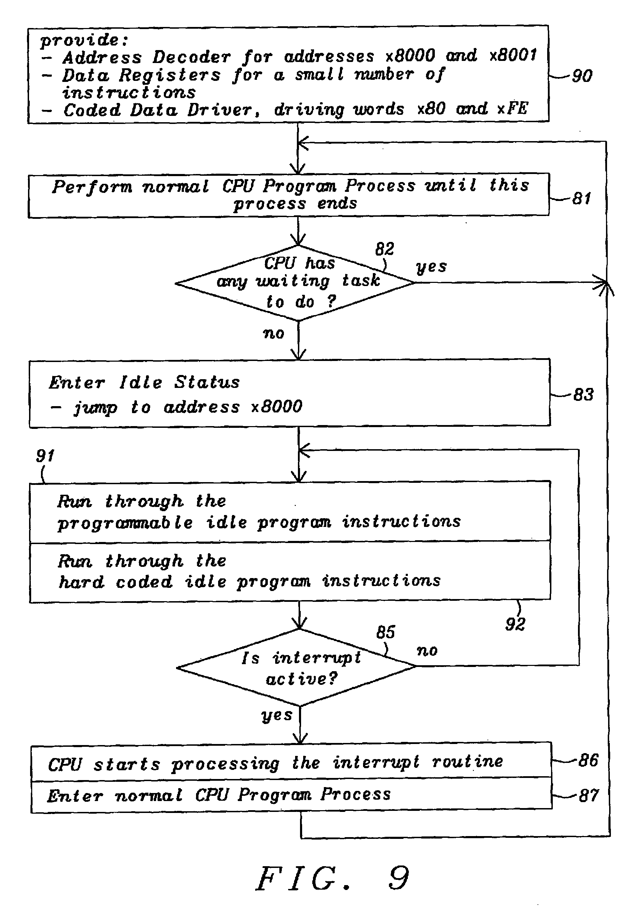

The method to achieve the objectives of this invention, building a low power replacement for the idle loop memory, implementing the combination of a programmable low power idle loop, followed by a hard wired low power idle loop is illustrated in **Fig. 9.** Many steps are identical to the method as shown in Fig. 8, In addition to the method of Fig. 8, programmable Data Registers for a small number of Instructions will be provided **(90).** When the idle loop is now entered, it first runs through the programmable idle program instructions **(91)** and at the end of the idle loop runs through the hard coded idle program instructions **(92).**

## Claims

1. A circuit implementing a microcontroller memory replacement of very low power, generating the small number of program instructions to build a microcontroller idle program routine, comprising
means for a microcontroller;
- means for an address bus with addresses provided by said microcontroller and normally intended to address the data in a program memory;
- means for a data bus, reading said data from said program memory by said microcontroller;
- means for the appropriate control and timing signals to control address selection and data access;
- means for an address decoder, decoding a very small number of specific addresses provided on said address bus, selecting the same very small number of specific program instruction words; and
- means for a set of coded data bus drivers, driving coded data, representing said very small number of specific program instruction words, addressed by said specific addresses, to said data bus.

2. The circuit of claim 1 where said microcontroller's idle routine requires only a single instruction to jump back just 1 instruction to its own address, thus running in a permanent loop with a single instruction.

3. The circuit of claim 1 where said microcontroller's idle routine requires two instructions to return back to the beginning of said idle program routine, thus running in a permanent loop with two instructions.

4. The circuit of claim 1 where said microcontroller's idle routine requires multiple instructions to return back to the beginning of the said idle program routine, thus running in a permanent loop with multiple instructions.

5. The circuit of claim 1 where said means for an address decoder and said means for a set of coded data bus drivers, driving coded data, are implemented within the same circuit arrangement, that builds the address decoder, chip select and write/read control signal generation for the conventional RAM and ROM memories of the microprocessor.

6. A circuit implementing a microcontroller memory replacement of very low power, storing a small number of program instructions to handle, for example, a short task dispatching program plus the small number of specific program instructions required to build a microcontroller idle program routine, comprising
- means for a microcontroller;
- means for an address bus with addresses provided by said microcontroller and normally intended to address the data content in a program memory;
- means for a data bus, reading data from said program memory by said microcontroller;
- means for the appropriate control and timing signals to control address selection and data access;
- means for an address decoder, decoding a small number of specific addresses provided on said address bus, selecting the same small number of program instruction words;
- means for a small set of data registers to store a multiple of program instructions to handle a short idle program;
- means to write data to said small set of data registers to store a multiple of program instructions;
- means to read data from said small set of data registers to store a multiple number of program instructions words;
- means to provide the coded data, representing the very small number of specific program instruction words to build a microcontroller idle program routine; and
- means for a set of data bus drivers, either driving said data read from said small set of data registers, storing a multiple of program instructions, or driving said very small number of specific program instruction words, to build a portion of a microcontroller idle program routine, to said data bus.

7. The circuit of claim 1 or 6 where said data bus is 8 bits or 16 bits wide.

8. The circuit of claim 6 where said small set of data registers to store a small number of program instructions has a built in circuit to preset them all to a NOOP program instruction, as long as no other data is written to said register by said microcontroller.

9. The circuit of claim 8 where instead of presetting all said data registers to NOOP instructions, presetting said data registers to a valid program instruction sequence.

10. The circuit of claim 1 or 6 where each of said program instruction is to be read in a single memory cycle.

11. The circuit of claim 1 or 6 where each of said program instruction is to be read in two memory cycles or multiple memory cycles.

12. The circuit of claim 6 where said means for an address decoder and said means for a set of data bus drivers, driving coded data, as well as said means for small set of data registers to store a multiple of program instructions and said means to provide the coded data, representing the very small number of specific program instruction words, are implemented within the same circuit arrangement, that builds the address decoder, chip select and write/read control signal generation for the conventional RAM and ROM memories of the microprocessor.

13. A method to implementing a microcontroller memory replacement, generating the small number of hard coded program instructions to build a microcontroller idle program routine, comprising;
- providing means for a microcontroller, means for an address bus with addresses provided by said microcontroller and normally intended to address the data content in a program memory, means for a data bus, reading data from said program memory by said microcontroller, means for the appropriate control and timing signals to control address selection and data access, means for an address decoder, decoding a very small number of specific addresses provided on said address bus, selecting the same very small number of specific program instruction words, and, means for a set of coded data bus drivers, driving said specific program instruction words, addressed by said specific addresses, to said data bus;
- addressing the instructions of said idle program routine within said microcontroller memory replacement by said microprocessor through said address bus;
- decoding a very small number of specific addresses provided on said address bus, selecting the same very small number of specific program instruction words;
- driving coded data, representing said very small number of specific program instruction words, addressed by said specific addresses, to said data bus;
- reading said coded data, representing said specific program instruction words from said data bus by said microcontroller; and
- interrupting the idle loop execution by means of a microcontroller's built in interrupt mechanism by an external event.

14. The method of claim 13 where said microcontroller's idle routine works with only a single instruction to jump back just 1 instruction to its own address, thus running in a permanent loop with a single instruction.

15. The method of claim 13 where said microcontroller's idle routine works with two instructions to return back to the beginning of said idle program routine, thus running in a permanent loop with two instruction.

16. The method of claim 13 where said microcontroller's idle routine works with multiple instructions to return back to the beginning of the said idle program routine, thus running in a permanent loop with multiple instruction.

17. A method implementing a microcontroller memory replacement circuit, storing a multiple of program instructions to handle, for example, a short task dispatching program plus the very small number of specific hard coded program instructions, required to build a microcontroller idle program routine, comprising;
- providing means for a microcontroller, means for an address bus with addresses provided by said microcontroller and normally intended to address the data content in a program memory, means for a data bus, reading data from said program memory by said microcontroller, means for the appropriate control and timing signals to control address selection and data access, means for an address decoder, decoding a multiple of specific addresses provided on said address bus, selecting the same multiple of program instruction words, means for small set of data registers to store a multiple of program instructions to handle a short idle program, means to write data to said small set of data registers to store a multiple of program instructions, means to read data from said small set of data registers to store a multiple of program instructions, means to provide the coded data, representing the very small number of specific program instruction words to build a microcontroller idle program routine and, means for a set of data bus drivers, either driving said data read from said small set of data registers, storing a multiple of program instructions, or driving said very small number of specific program instruction words, to build a microcontroller idle program routine, to said data bus;
- addressing a small number of program instructions, including said multiple of program instructions to handle a short idle program and including said very small number of specific hard coded program instructions, to build a microcontroller idle program routine, within said microcontroller memory replacement circuit by said microprocessor through said address bus;
- decoding a small number of specific addresses provided on said address bus, selecting the same small number of specific program instruction words;
- storing a multiple of program instructions to handle a short idle program in a small set of data registers;
- writing data to said small set of data registers to store a multiple of program instructions to handle a short idle program;
- reading data from said small set of data registers to store a multiple of program instructions to handle a short idle program;
- providing the data, representing the very small number of specific hard coded program instruction words to build a microcontroller idle program routine and;
- driving the data, either representing said data read from said small set of data registers, storing a multiple of program instructions, or representing said very small number of specific program instruction words, and addressed by said specific addresses, to said data bus;
- reading said data, representing said specific program instruction words from said data bus by said microcontroller; and
- interrupting the idle loop execution at an external event either by means of a microcontroller's built in interrupt mechanism or by detecting an external interrupt condition within said short idle program, for example within said short task dispatching program.

18. The method of claim 17 where said small set of data registers to store a small number of program instructions has a built in function to preset them all to a NOOP program instruction, at system initialization time.

19. The method of claim 18 where instead of presetting all said data registers to NOOP instructions, presetting said data registers to a valid program instruction sequence.

20. The method of claim 17 where said short idle program is loaded once after system initialization time.

21. The method of claim 17 where varying versions of said short idle programs are loaded to execute tailored idle loops, waiting for specific external events.

22. The method of claim 13 or 17 where each of said program instruction is read either in a single memory cycle

23. The method of claim 13 or 17 where each of said program instruction is read in two memory cycles or in multiple memory cycles.
